# EUROPEAN PATENT SPECIFICATION

(11) **EP 3 495 810 B1**
(45) Date of publication and mention of the grant of the patent: **04.11.2020**
(21) Application number: 17886846.9
(22) Date of filing: 26.12.2017
(51) Int. Cl.: G01N 27/404, G01N 27/416

(54) **ELECTROCHEMICAL OXYGEN SENSOR**
ELEKTROCHEMISCHER SAUERSTOFFSENSOR
CAPTEUR D'OXYGÈNE ÉLECTROCHIMIQUE

(30) Priority: 28.12.2016 JP 2016256733
(43) Date of publication of application: 12.06.2019
(73) Proprietor: Maxell, Ltd., Kyoto 6188525 (JP)
(72) Inventor: KITAZAWA, Naohisa, Kyoto-shi Kyoto 601-8520 (JP)
(74) Representative: Diehl & Partner
(86) International application number: PCT/JP2017/046622
(87) International publication number: WO 2018/124066

(56) References cited:
- EP-A1- 2 219 024
- EP-A1- 2 950 089
- WO-A1-2009/069749
- JP-A- S6 472 050
- JP-A- H06 138 080
- JP-A- S52 127 392
- JP-A- 2004 132 915
- JP-A- 2009 150 657
- JP-A- 2009 150 657
- JP-A- 2016 006 412
- US-A- 4 894 138
- US-A1- 2014 231 253
- US-A1- 2014 231 253

## Description

### Technical Field

The present invention relates to an electrochemical oxygen sensor.

### Background Art

Electrochemical oxygen sensors (also referred to as "oxygen sensors" hereinafter) are advantageous in that they are inexpensive and convenient and can operate at ordinary temperatures. Thus, these oxygen sensors have been used widely in various fields, such as for checking the degree of oxygen deficiency in holds of ships and in manholes and for detecting the oxygen concentration in medical equipment such as anesthesia apparatuses and respirators.

As such an electrochemical oxygen sensor, Patent Document 1 discloses "an electrochemical oxygen sensor comprising a cathode, an anode, and an electrolyte solution, wherein said electrolyte solution contains a chelating agent" (claim 1). Patent Document 1 also discloses, as an effect of the invention, that "according to the present invention, an electrochemical oxygen sensor can be provided which provides a high response speed" (paragraph [0015]).

Patent Document 2 discloses a galvanic cell type oxygen sensor wherein the anode contains a Pb-Sb alloy, however it does not teach the use of a chelating agent in the electrolyte.

Patent Document 3 discloses the use of an aqueous solution of citric acid for the electrolyte solution, i.e. the use of a chelating agent. Furthermore, it discloses adjusting the pH of the solution to between 3 and 7. However, Patent Document 3 fails to disclose that the negative electrode is made out of Sn or a Sn alloy.

### Prior Art Document

### Patent Document

Patent Document 1: WO 2009/069749
Patent Document 2: EP2950089 A1
Patent Document 3: US4894138 A

### Disclosure of Invention

### Problem to be solved by the Invention

However, with the use of the chelating agent disclosed in Patent Document 1 in an electrolyte solution, there is a limit to the extent to which the service life of an oxygen sensor can be improved.

The present invention was made in order to solve the above-described problem, and it is an object of the present invention to provide an electrochemical oxygen sensor that attains a high response speed and also an improved service life of the oxygen sensor.

### Means for Solving the Problem

The electrochemical oxygen sensor according to the present invention is an electrochemical oxygen sensor according to claim 1 and includes a holder, a positive electrode, a negative electrode, and an electrolyte solution, the positive electrode, the negative electrode, and the electrolyte solution being contained in the holder, wherein the negative electrode is made of Sn or an Sn alloy,the electrolyte solution contains a chelating agent and a molar concentration of the chelating agent is 1.4 mol/L or higher,the electrolyte solution contains at least one of citric acid and citrate as the chelating agent, and the electrolyte solution is a buffer solution having a pH of not less than 2.09 and not more than 7.40.

### Effects of the Invention

The present invention can provide an electrochemical oxygen sensor that attains a high response speed and also an improved service life of the oxygen sensor.

### Brief Description of Drawings

[FIG. 1] FIG. 1 is a schematic diagram showing a cross-sectional structure of a galvanic cell type oxygen sensor according to a preferred embodiment of the present invention.
[FIG. 2] FIG. 2 is a schematic diagram showing a cross-sectional structure of a galvanic cell type dissolved oxygen sensor according to another preferred embodiment of the present invention.
[FIG. 3] FIG. 3 is a schematic diagram for illustrating the state where output voltage is stabilized.

### Description of the Invention

The configuration, operation, and effects of the present invention will be described with reference to the technical idea of the invention. It should be noted that the descriptions regarding the operation and effects include presumptions and whether they are correct or not does not limit the present invention by any means. It also should be noted that, among constituent elements described in the following embodiments, those that are not recited in the independent claim defining the most generic concept are described as optional constituent elements.

The inventor of the present invention found out that the service life of an oxygen sensor is proportional to the molar concentration (mol/L) of a chelating agent contained in an electrolyte solution.

On the basis of this finding, the inventor of the present invention discovered that, in order to improve the service life of an oxygen sensor in which an electrolyte solution contains a chelating agent while maintaining a high response speed, it is important to increase the molar concentration of the chelating agent, thereby achieving the present invention.

The term "chelating agent" as used in the present invention refers to molecules that have multiple functional groups such as carboxyl groups and amino groups capable of coordinating with a metal ion and that form a complex with the metal ion, thereby inactivating the metal ion.

The term "molar concentration (mol/L)" as used in the present invention refers to the number of moles of a solute dissolved in 1 L (liter) of a solution at 25°C.

A preferred embodiment of the present invention (referred to as "the present embodiment" hereinafter) will be described specifically using a galvanic cell type oxygen sensor, which is one type of electrochemical oxygen sensor.

The galvanic cell type oxygen sensor is an electrochemical oxygen sensor with a resistor connected between a positive electrode and a negative electrode. Specifically, in the galvanic cell type oxygen sensor, a current generated by electrochemical reduction of oxygen on the positive electrode is converted to a voltage at the resistor. The current converted to the voltage is proportional to the oxygen concentration. Accordingly, by measuring the voltage, it is possible to detect the oxygen concentration in unknown gas.

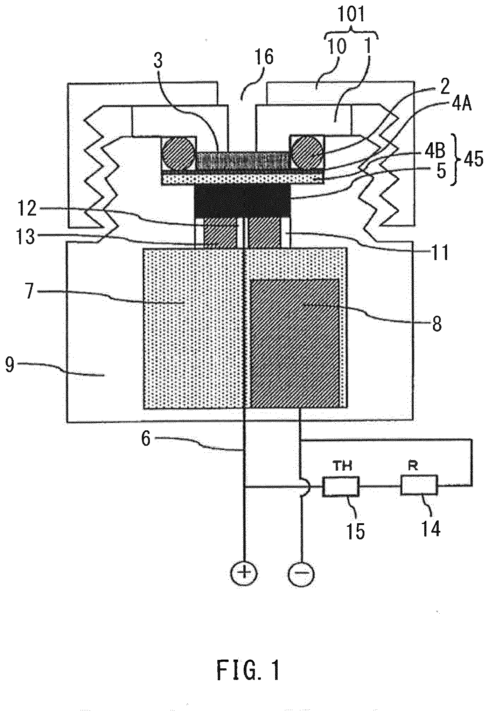

FIG. 1 is a schematic diagram showing a cross-sectional structure of a galvanic cell type oxygen sensor according to the present embodiment.

In FIG. 1, numeral 1 denotes a first holder lid (inner lid), numeral 2 denotes an O-ring, numeral 3 denotes a protective film for preventing adhesion of dirt and dust or adhesion of a water film to a membrane, numeral 4A denotes the membrane, numeral 4B denotes a catalytic electrode, numeral 5 denotes a positive electrode current collector, numeral 6 denotes a positive electrode lead wire, numeral 7 denotes an electrolyte solution, numeral 8 denotes a negative electrode, numeral 9 denotes a holder, numeral 10 denotes a second holder lid (outer lid), numeral 11 denotes a bore for the supply of the electrolyte solution, numeral 12 denotes a bore for the lead wire, numeral 13 denotes a positive electrode current collector holding section, numeral 14 denotes a correction resistor, and numeral 15 denotes a temperature compensation thermistor. The catalytic electrode 4B and the positive electrode current collector 5 constitute a positive electrode 45. The first holder lid 1 and the second holder lid 10 constitute a holder lid 101.

The galvanic cell type oxygen sensor according to the present embodiment may be embodied so as to have the configuration as shown in FIG. 1, for example, and it includes the holder 9 and the positive electrode 45, negative electrode 8, and electrolyte solution 7, which are contained in the holder 9.

The holder 9 is configured so as to contain the positive electrode 45, the negative electrode 8, and the electrolyte solution 7 therein. The material of the holder 9 is not particularly limited as long as it does not cause problems such as corrosion by the electrolyte solution 7 to be described below, and ABS resin is preferably used.

The positive electrode 45 is contained in the holder 9. The material of the positive electrode 45 is not particularly limited as long as a current is generated by electrochemical reduction of oxygen on the positive electrode, and a catalyst made of gold (Au), silver (Ag), platinum (Pt), titanium (Ti), or the like that is active for oxidation and reduction is preferably used.

The electrolyte solution 7 is contained in the holder 9. The electrolyte solution 7 contains a chelating agent. The molar concentration of the chelating agent is 1.4 mol/L or higher.

Since the electrolyte solution 7 contains the chelating agent at a molar concentration of 1.4 mol/L or higher, the galvanic cell type oxygen sensor can attain a high response speed and also an improved service life of the oxygen sensor.

That is, since the electrolyte solution 7 contains the chelating agent, the response speed is increased owing to the chelate effect. In addition, since the molar concentration of the chelating agent contained in the electrolyte solution 7 is 1.4 mol/L or higher, the service life of the oxygen sensor is improved.

The chelating agent whose molar concentration can be set to 1.4 mol/L or higher is at least one of citric acid and citrates. The citric acid and citrates exhibit high degrees of solubility (see the numerical value in brackets on the right) in water (25°C) (citric acid [73 g/100 ml], trisodium citrate [71 g/100 ml], and tripotassium citrate [167 g/100 ml]). Accordingly, the molar concentration of the chelating agent can be made high.

More preferably, the chelating agent at least contains tripotassium citrate.

As described above, the solubility of tripotassium citrate in water is very high. Accordingly, the molar concentration of the chelating agent can be made still higher.

The upper limit of the molar concentration varies depending on the type of chelating agent, and is determined as a maximum number of moles of the chelating agent that can be dissolved in 1 L (liter) of a solution (water) at 25°C. When the chelating agent is a mixed solution containing citric acid and tripotassium citrate, the upper limit is 3.0 mol/L, and more preferably 2.3 mol/L.

On the other hand, acetic acid, boric acid, phosphoric acid, ammonia, carbonic acid, and salts thereof, which are not encompassed in the "chelating agent" in the present invention, are not preferable, because they exhibit low complexing power and thus a high response speed cannot be attained when any of these substances alone is contained in the electrolyte solution 7 as the chelating agent.

The requirement that "the electrolyte solution contains a chelating agent" in the present invention means "the molar concentration of the chelating agent is 1.4 mol/L or higher" (providing an electrochemical oxygen sensor that attains a high response speed and also an improved service life of the oxygen sensor; the same applies hereinafter). Furthermore, the electrolyte solution 7 may contain, in addition to the chelating agent, any component(s) (including substances with low complexing power, such as acetic acid, boric acid, phosphoric acid, ammonia, carbonic acid, and salts thereof) other than the chelating agent.

The pH of the electrolyte solution at 25°C (the same applies hereinafter) when the chelating agent is at least one of citric acid and citrates is not less than 2.09 and not more than 7.40.

The electrolyte solution with a pH in the above-described range can be obtained by mixing citric acid and tripotassium citrate and adjusting the composition ratio thereof. The pH of the electrolyte solution may be adjusted by adding sodium hydroxide (NaOH), potassium hydroxide (KOH), or the like to a mixed solution containing citric acid and tripotassium citrate. The pH of the electrolyte solution also may be adjusted by adding an acid (e.g., acetic acid, phosphoric acid, or carbonic acid) to tripotassium citrate (pH 7.8 to 8.6).

By setting the pH of the electrolyte solution in the above-described range, the electrolyte solution serves as a pH buffer (citric acid [pKₐ₁ = 3.09, pKₐ₂ = 4.75, and pKₐ₃ = 6.40]), whereby a change in pH resulting from complex formation of the chelating agent contained in the electrolyte solution with a metal can be suppressed. Accordingly, it is possible to stabilize the output voltage of the oxygen sensor.

Preferably, the pH is not less than 2.59 and not more than 6.90.

The pH of the electrolyte solution at 25°C when the chelating agent is citric acid is preferably not less than 5.40 and not more than 7.40.

The electrolyte solution with a pH in the above-described range can be obtained by mixing citric acid and tripotassium citrate and adjusting the composition ratio thereof. The pH of the electrolyte solution may be adjusted by adding sodium hydroxide (NaOH), potassium hydroxide (KOH), or the like to citric acid or/and tripotassium citrate. The pH of the electrolyte solution also may be adjusted by adding an acid (e.g., acetic acid, phosphoric acid, or carbonic acid) to tripotassium citrate (pH 7.8 to 8.6).

By setting the pH of the electrolyte solution in the above-described range, the electrolyte solution serves as a pH buffer (citric acid [pKₐ₃ = 6.40]), whereby a change in pH resulting from complex formation of the chelating agent contained in the electrolyte solution with a metal can be suppressed. Accordingly, it is possible to stabilize the output voltage of the oxygen sensor. Furthermore, since the pH of the electrolyte solution is more acidic, it is possible to obtain an oxygen sensor that exhibits high output voltage stability in an acidic environment.

More preferably, the pH is not less than 5.90 and not more than 6.90.

The pH of the electrolyte solution at 25°C when the chelating agent is citric acid is preferably not less than 3.75 and not more than 5.75.

The electrolyte solution with a pH in the above-described range can be obtained by mixing citric acid and tripotassium citrate and adjusting the composition ratio thereof. The pH of the electrolyte solution may be adjusted by adding sodium hydroxide (NaOH), potassium hydroxide (KOH), an acid (e.g., acetic acid, phosphoric acid, or carbonic acid), or the like to a mixed solution containing citric acid and tripotassium citrate.

By setting the pH of the electrolyte solution in the above-described range, the electrolyte solution serves as a pH buffer (citric acid [pKₐ₂ = 4.75]), whereby a change in pH resulting from complex formation of the chelating agent contained in the electrolyte solution with a metal can be suppressed. Accordingly, it is possible to stabilize the output voltage of the oxygen sensor. Furthermore, since the electrolyte solution is more strongly acidic, it is possible to obtain an oxygen sensor that exhibits high output voltage stability in an acidic environment.

More preferably, the pH is not less than 4.25 and not more than 5.25.

The pH of the electrolyte solution at 25°C when the chelating agent is citric acid is preferably not less than 2.09 and not more than 4.09.

The electrolyte solution with a pH in the above-described range can be obtained by mixing citric acid and tripotassium citrate and adjusting the composition ratio thereof. The pH of the electrolyte solution may be adjusted by adding sodium hydroxide (NaOH), potassium hydroxide (KOH), an acid (e.g., acetic acid, phosphoric acid, or carbonic acid), or the like to a mixed solution containing citric acid and tripotassium citrate.

By setting the pH of the electrolyte solution in the above-described range, the electrolyte solution serves as a pH buffer (citric acid [pKₐ₁ = 3.09]), whereby a change in pH resulting from complex formation of the chelating agent contained in the electrolyte solution with a metal can be suppressed. Accordingly, it is possible to stabilize the output voltage of the oxygen sensor. Furthermore, since the electrolyte solution is still more strongly acidic, it is possible to obtain an oxygen sensor that exhibits high output voltage stability in an acidic environment.

More preferably, the pH is not less than 2.59 and not more than 3.59.

The negative electrode 8 is contained in the holder 9.

The material of the negative electrode 8 is Sn or a Sn alloy.

The material of the negative electrode 8 may also contain a metal(s) other than the negative electrode metals and other impurities. Examples of the metal other than the negative electrode metals and other impurities include In, Au, Bi, Na, S, Se, and Ca.

Preferably, the negative electrode 8 is made of an Sn alloy.

Using the Sn alloy makes it possible to inhibit hydrogen generation during an electrochemical reduction reaction of oxygen in the oxygen sensor.

More preferably, the Sn alloy is an Sn-Sb alloy.

In the Sn-Sb alloy, the metal structure of Sn is more microscopic than those in other Sn alloys, and therefore, transformation (phase transition) to α-Sn (also known as "tin pest") can be suppressed. Accordingly, it is considered that the use of the Sn-Sb alloy allows the sensor to operate at low temperature (e.g., 0°C) and that a decrease in the output stability of the sensor can be suppressed even at low temperature.

It is preferable that the negative electrode 8 (preferably an Sn alloy and more preferably an Sn-Sb alloy) is substantially lead free.

The expression "substantially lead free" as used herein means that the content of Pb in the negative electrode 8 is less than 1000 ppm. By using the negative electrode 8 configured as such, it is possible to obtain an electrochemical oxygen sensor that complies with the directive on restriction of the use of certain hazardous substances in the EU (European Union) (the so-called RoHS Directive [Restriction of the Use of Certain Hazardous Substances in Electrical and Electronic Equipment]).

The content of Sb in the Sn-Sb alloy is not particularly limited without departing from the gist of the present invention.

In the present invention, the content of Sb in the Sn-Sb alloy is expressed in mass%, and is determined by performing EDX analysis (beam diameter: 1 mm) with respect to any desired portion of the negative electrode 8 to be subjected to measurement and calculating the content of Sb in all the metal elements measured in that portion.

More specifically, the galvanic cell type oxygen sensor according to the present embodiment include, as shown in FIG. 1, the holder 9, the positive electrode 45, negative electrode 8, and electrolyte solution 7, which are contained in the holder 9, the membrane 4A provided on the positive electrode 45, the protective film 3 provided on the membrane 4A, the first holder lid (inner lid) 1 for fixing the protective film 3, the O-ring 2 disposed between the holder 9 and the inner lid 1, the second holder lid (outer lid) 10 for fixing the inner lid 1, and the correction resistor 14 and the temperature compensation thermistor 15, which are connected in series to the positive electrode 45 and the negative electrode 8. The holder lid 101 constituted by the outer lid 10 and the inner lid 1 is provided with a through hole 16 that serves as an oxygen supply pathway (space) leading to the protective film 3.

The holder 9 is provided with an opening in an upper part thereof, and an outer peripheral portion of the opening is provided with a thread section that is formed of thread ridges and thread grooves and is used for threaded engagement with the outer lid 10.

The positive electrode 45 is constituted by the catalytic electrode 4B for electrochemically reducing oxygen and the positive electrode current collector 5 disposed on the electrolyte solution 7 side of the catalytic electrode 4B. As the material of the catalytic electrode 4B, gold (Au), silver (Ag), platinum (Pt), or the like is typically used. As the material of the positive electrode current collector 5, titanium (Ti) is typically used. It is to be noted that both the materials are not limited to those described above.

The positive electrode current collector holding section 13 for holding the positive electrode current collector 5 is disposed below the positive electrode current collector 5.

This positive electrode current collector holding section 13 is provided with the bore 11 for the supply of the electrolyte solution to the positive electrode 45 and the bore 12 configured to allow the positive electrode lead wire 6 to pass therethrough.

The material of the positive electrode current collector holding section 13 is not particularly limited, and ABS resin is typically used.

The membrane 4A in the present embodiment is disposed for control of the entry of oxygen so as not to allow an excess amount of oxygen to reach the catalytic electrode 4B. Preferably, the membrane 4A is such that it selectively allows oxygen to pass therethrough and also can limit the amount of oxygen passing therethrough. The material and the thickness of the membrane 4A are not particularly limited, and a fluorocarbon polymer such as polytetrafluoroethylene or a tetrafluoroetylene-hexafluoropropylene copolymer, a polyolefin such as polyethylene, or the like is typically used. Examples of the membrane 4A include porous membranes, non-porous membranes, and further, membranes in which capillary tubes are formed, which are called capillary-type membranes.

The protective film 3 in the present embodiment is a porous resin film provided on the membrane 4A and has a function of preventing adhesion of dirt and dust or adhesion of a water film to the membrane 4A. The material of the protective film 3 is not particularly limited, and a fluorocarbon polymer such as polytetrafluoroethylene is typically used.

The inner lid 1 in the present embodiment functions as a presser end plate for pressing the protective film 3 and the positive electrode 45. When the outer lid 10 is screwed onto the holder 9, the inner lid 1 is pressed against the holder 9 via the O-ring 2, whereby the protective film 3 and the positive electrode 45 can be fixed to the holder 9 with maintaining airtightness and liquid tightness. The material of the inner lid 1 is not particularly limited, and ABS resin, polypropylene, polycarbonate, a fluorocarbon polymer, or the like is typically used.

The O-ring 2 in the present embodiment is disposed between the holder 9 and the inner lid 1. When the outer lid 10 is screwed onto the holder 9, the O-ring 2 is pressed and deformed, thereby allowing the airtightness and the liquid tightness to be maintained. The material of the O-ring 2 is not particularly limited, and nitrile rubber, silicone rubber, ethylene-propylene rubber, a fluorocarbon polymer, or the like is typically used.

The outer lid 10 in the present embodiment is configured so as to seal the opening of the holder 9 in cooperation with the O-ring 2 and the inner lid 1. An inner peripheral portion of the outer lid 10 is provided with a thread section that is threadedly engageable with the thread section provided in the outer peripheral portion of the opening of the holder 9. The material of the outer lid 1 is not particularly limited, and ABS resin, polypropylene, polycarbonate, a fluorocarbon polymer, or the like is typically used.

It should be noted that the present invention is not limited to the above-described embodiment, and various changes and modification can be made within the scope of the claims.

For example, the constituent elements denoted by numerals 1 to 15 in FIG. 1 are not limited those shown in FIG. 1, and various changes and modifications in design may be made as long as functions as the oxygen sensor and the above-described oxygen supply pathways are provided.

Although the present invention has been described using a galvanic cell type oxygen sensor in the present embodiment, the present invention is also applicable to a potentiostatic type oxygen sensor.

The potentiostatic type oxygen sensor is a sensor configured such that a constant voltage is applied between a positive electrode and a negative electrode, and the voltage to be applied is set depending on the electrochemical characteristics of the respective electrodes and the type of gas to be detected. In the potentiostatic type oxygen sensor, a current that flows between the positive electrode and the negative electrode when an appropriate constant voltage is applied therebetween is proportional to the oxygen gas concentration. Thus, by converting the current to a voltage, it becomes possible to detect the oxygen gas concentration in unknown gas by measuring the voltage, as in the case of a galvanic cell type oxygen sensor.

The present invention is also applicable to a galvanic cell type dissolved oxygen sensor.

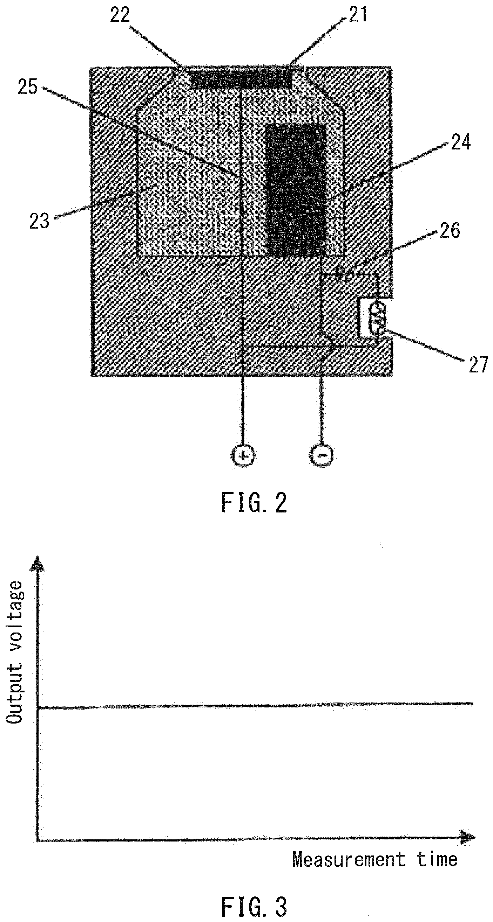

FIG. 2 is a schematic diagram showing a cross-sectional structure of a galvanic cell type dissolved oxygen sensor which does not form part of the invention.

The galvanic cell type dissolved oxygen sensor according Fig. 2, which does not form part of the invention, includes a membrane 21, a positive electrode 22, an electrolyte solution 23, a negative electrode 24, a lead wire 25, a correction resistor 26, and a temperature compensation thermistor 27. The membrane 21 is, for example, a membrane formed of a tetrafluoroetylene-hexafluoropropylene copolymer. The positive electrode 22 is, for example, a carbon fiber electrode coated with gold, and the gold acts as a catalyst effective for electrochemical reduction of oxygen. The electrolyte solution 23 is, for example, a mixed aqueous solution containing acetic acid, potassium acetate, and lead acetate. The negative electrode 24 is a lead electrode, for example. The lead wire 25 is made of titanium, for example. The temperature compensation thermistor 27 is attached to the outer wall of the galvanic cell type dissolved oxygen sensor.

By applying the present invention described above to a galvanic cell type dissolved oxygen sensor, it is possible to obtain the galvanic cell type dissolved oxygen sensor that similarly attains a high response speed and also an improved service life of the oxygen sensor.

### Examples

Next, the present invention will be described more specifically with reference to examples. It should be noted, however, that the present invention is not limited thereto.

### Examples 1 to 3

Galvanic cell type oxygen sensors shown in FIG. 1 were produced. In the configuration shown in FIG. 1, the inner lid 1 was made of ABS resin, the protective film 3 was a porous polytetrafluoroethylene sheet, the membrane 4A was a tetrafluoroetylene-hexafluoropropylene copolymer membrane, the catalytic electrode 4B was made of gold (Au), the positive electrode current collector 5 was made of titanium, the positive electrode lead wire 6 was made of titanium, and the positive electrode current collector 5 and the positive electrode lead wire 6 were integrated with each other by welding.

The negative electrode 8 was made of an Sn-5.0 Sb alloy (the numerical value on the left indicates the content of Sb in mass% in the Sn alloy). As the electrolyte solution 7, a citric acid-tripotassium citrate aqueous solution was used, and the molar concentrations of the citric acid and the tripotassium citrate were adjusted as shown in Table 1. The holder body 9 was made of ABS resin. The outer lid 10 was made of ABS resin. The holder body 9 and the outer lid 10 were both threaded.

The inner lid 1, the O-ring 2, the polytetrafluoroethylene sheet (protective film) 3, the membrane 4A formed of the tetrafluoroetylene-hexafluoropropylene copolymer membrane, the catalytic electrode 4B, and the positive electrode current collector 5 were pressed against each other when the outer lid 10 was screwed onto the holder body 9, whereby they were kept in a favorable contact state. The inner lid 1 functioned as a presser end plate, and the airtightness and the liquid tightness were secured by the O-ring 2.

The numeral 11 denotes a bore for the supply of the electrolyte solution to the positive electrode and the membrane, and the numeral 12 denotes a perforation configured to allow the titanium lead wire of the positive electrode current collector to pass therethrough.

### Comparative Example 1

A 1-year service life galvanic cell type oxygen sensor shown in FIG. 1 and having the same configuration as that of Example 1 except for the followings was produced: a tetrasodium EDTA (Etylene Diamine Tetraacetic Acid) aqueous solution (the solubility in water at 25°C was 60 g/100 ml) was used as the chelating agent and the molar concentration of the chelating agent was such that the solubility in water was close to the saturated concentration (the molar concentration: 1.2 mol/L).

### Comparison of characteristics

For the thus-produced multiple galvanic cell type oxygen sensors, evaluation of "90% response speed" was made two months after the production. The 90% response speed was determined by causing the output from each of the oxygen sensors to be stabilized in the air (oxygen concentration: 21%), passing oxygen at a concentration of 100% through the sensor exhibiting stabilized output, setting the output (saturation output) obtained by passing the oxygen at a concentration of 100% to 100%, and measuring the time period required until the output was changed by 90%. In this evaluation test, the output obtained 30 minutes after the start of passing the oxygen was regarded as the saturation output. The results obtained in the above-described evaluation test are shown in Table 1. In Table 1, "Good" means that the 90% response speed was less than 15 seconds, "Fair" means that the 90% response speed was not less than 15 seconds and less than 60 seconds, and "Poor" means that the 90% response speed was not less than 60 seconds.

Furthermore, the produced multiple galvanic cell type oxygen sensors were allowed to stand at ordinary temperature (25°C) for 360 days under the same environment, and thereafter, whether the output voltage of each of the oxygen sensors was stable was evaluated. The expression that the output voltage was stable as used in this context means that, when the trend of the output voltage over the measurement time is plotted with the horizontal axis representing the measurement time and the vertical axis representing the output voltage as shown in FIG. 3, a straight line as shown in FIG. 3 is obtained.

In addition, accelerated life testing was performed by passing oxygen gas at a concentration of 100% through each of the oxygen sensors at 40°C. Electrochemical reactions at 40°C proceed about twice as fast as those at room temperature, and also, electrochemical reactions when oxygen gas at a concentration of 100% is passed through the oxygen sensor proceed about 5 times as fast as those in the air. Accordingly, this accelerated life testing can determine the service lives of the oxygen sensors about 10 times faster than in the case where they are allowed to stand at room temperature in the air. In the accelerated life testing, the service lives of the oxygen sensors of the respective examples were evaluated by indicating how many times greater their service lives were than the service life of the oxygen sensor of Comparative Example 1, assuming that the service life of the oxygen sensor of Comparative Example 1 was 1.0. The results thereof are shown in Table 1.

**[Table 1]**

| | Composition of electrolyte solution | | | | pH (25°C) | Output voltage | Response speed | Service life |
|---|---|---|---|---|---|---|---|---|
| | Component 1 | Molar concentration (mol/L) | Component 2 | Molar concentration (mol/L) | | | | |
| Example 1 | Citric acid | 0.26 | Tripotassium citrate | 2.0 | 6.37 | Stable | Good | 3.1 |
| Example 2 | Citric acid | 1.0 | Tripotassium citrate | 1.2 | 4.56 | Stable | Good | 3.0 |
| Example 3 | Citric acid | 0.6 | Tripotassium citrate | 0.8 | 4.48 | Stable | Good | 1.6 |
| Comparative Example 1 | Tetrasodium EDTA | 1.2 | - | - | 11.11 | Stable | Good | 1.0 |

As can be seen from Table 1, the galvanic cell type oxygen sensors of Examples 1 to 3 each exhibited a high response speed and a stable output voltage. Moreover, regarding the service life, it was found that the service life of the oxygen sensor of Example 3 was improved to 1.6 times that of the oxygen sensor of Comparative Example 1, and besides, the service lives of the oxygen sensors of Examples 1 and 2 were improved to about 3.0 times that of the oxygen sensor of Comparative Example 1.

### Description of Reference Numerals

- 1: First holder lid (inner lid)
- 2: O-ring
- 3: Protective film
- 4A: Membrane
- 4B: Catalytic electrode
- 5: Positive electrode current collector
- 6: Positive electrode lead wire
- 7: Electrolyte solution
- 8: Negative electrode
- 9: Holder
- 10: Second holder lid (outer lid)
- 11: Bore for supply of electrolyte solution
- 12: Bore for lead wire
- 13: Positive electrode current collector holding section
- 14: Correction resistor
- 15: Temperature compensation thermistor
- 16: Through hole
- 45: Positive electrode
- 101: Holder lid

## Claims

1. An electrochemical oxygen sensor comprising:
a holder (9);
a positive electrode (45);
a negative electrode (8); and
an electrolyte solution (7),
the positive electrode (45), the negative electrode (8), and the electrolyte solution (7) being contained in the holder (9),
wherein the negative electrode (8) is made of Sn or an Sn alloy,
the electrolyte solution (7) contains a chelating agent and a molar concentration of the chelating agent is 1.4 mol/L or higher,
the electrolyte solution (7) contains at least one of citric acid and citrate as the chelating agent, and
the electrolyte solution (7) is a buffer solution having a pH of not less than 2.09 and not more than 7.40.

2. The electrochemical oxygen sensor according to claim 1, wherein
the negative electrode (8) is made of an Sn alloy.

3. The electrochemical oxygen sensor according to claim 1 or 2, wherein
the electrolyte solution contains citric acid and citrate as the chelating agent.

4. The electrochemical oxygen sensor according to any one of claims 1 to 3, wherein
the electrolyte solution contains trisodium citrate or tripotassium citrate.

5. The electrochemical oxygen sensor according to any one of claims 1 to 4, wherein
the electrolyte solution has a pH of not less than 2.59 and not more than 6.90.

6. The electrochemical oxygen sensor according to claim 1 or 2, wherein the electrolyte solution contains citric acid as the chelating agent, and
the electrolyte solution has a pH of not less than 3.75 and not more than 5.75.

7. The electrochemical oxygen sensor according to claim 2, wherein
the negative electrode is made of an Sn-Sb alloy.

8. The electrochemical oxygen sensor according to any one of claims 1 to 7, wherein a content of Pb in the negative electrode is less than 1000 ppm.

9. The electrochemical oxygen sensor according to any one of claims 1 to 8, wherein
the electrolyte solution further contains at least one selected from the group consisting of acetic acid, boric acid, phosphoric acid, ammonia, carbonic acid, and salts of these compounds.

## Patentansprüche

1. Elektrochemischer Sauerstoffsensor, mit:
einer Halterung (9);
einer positiven Elektrode (45);
einer negativen Elektrode (8); und
einer Elektrolytlösung (7),
wobei die positive Elektrode (45), die negative Elektrode (8) und die Elektrolytlösung (7) in der Halterung aufgenommen sind (9), wobei die negative Elektrode (8) aus Sn oder einer Sn-Legierung besteht,
die Elektrolytlösung (7) ein Chelat-Agens enthält und eine molare Konzentration des Chelat-Agens 1,4 Mol/L oder höher,
die Elektrolytlösung (7) Zitronensäure oder Zitrat als Chelat-Agens enthält, und
die Elektrolytlösung (7) eine Pufferlösung mit einem pH von nicht unter 2,09 und nicht über 7,40 ist.

2. Elektrochemischer Sauerstoffsensor gemäß Anspruch 1, wobei
die negative Elektrode (8) aus einer Sn-Legierung besteht.

3. Elektrochemischer Sauerstoffsensor gemäß Anspruch 1 oder 2, wobei
die Elektrolytlösung Zitronensäure und Zitrat als das Chelat-Agens enthält.

4. Elektrochemischer Sauerstoffsensor gemäß einem der Ansprüche 1 bis 3, wobei
die Elektrolytlösung Trinatriumzitrat oder Trikaliumzitrat enthält.

5. Elektrochemischer Sauerstoffsensor gemäß einem der Ansprüche 1 bis 4, wobei
die Elektrolytlösung einen pH von nicht weniger als 2,59 und nicht mehr als 6,90 aufweist.

6. Elektrochemischer Sauerstoffsensor gemäß Anspruch 1 oder 2, wobei die Elektrolytlösung Zitronensäure als das Chelat-Agens enthält, und die Elektrolytlösung einen pH von nicht weniger als 3,75 und nicht mehr als 5,75 aufweist.

7. Elektrochemischer Sauerstoffsensor gemäß Anspruch 2, wobei die negative Elektrode aus einer Sn-Sb-Legierung besteht.

8. Elektrochemischer Sauerstoffsensor gemäß einem der Ansprüche 1 bis 7, wobei der Gehalt an Pb in der negativen Elektrode weniger als 1000 ppm beträgt.

9. Elektrochemischer Sauerstoffsensor gemäß einem der Ansprüche 1 bis 8, wobei
die Elektrolytlösung ferner Essigsäure, Borsäure, Phosphorsäure, Ammoniak, Kohlensäure oder Salze dieser Verbindungen enthält.

## Revendications

1. Capteur d'oxygène électrochimique comprenant :
un support (9) ;
une électrode positive (45) ;
une électrode négative (8) ; et
une solution d'électrolyte (7),
l'électrode positive (45), l'électrode négative (8) et la solution d'électrolyte (7) étant contenues dans le support (9),
dans lequel l'électrode négative (8) est faite de Sn ou d'un alliage de Sn,
la solution d'électrolyte (7) contient un agent chélatant et la concentration molaire de l'agent chélatant est de 1,4 mol/l ou plus,
la solution d'électrolyte (7) contient au moins l'un parmi l'acide citrique et un citrate en tant qu'agent chélatant, et
la solution d'électrolyte (7) est une solution tampon ayant un pH non inférieur à 2,09 et non supérieur à 7,40.

2. Capteur d'oxygène électrochimique selon la revendication 1, dans lequel l'électrode négative (8) est faite d'un alliage de Sn.

3. Capteur d'oxygène électrochimique selon la revendication 1 ou 2, dans lequel la solution d'électrolyte contient de l'acide citrique et un citrate en tant qu'agent chélatant.

4. Capteur d'oxygène électrochimique selon l'une quelconque des revendications 1 à 3, dans lequel la solution d'électrolyte contient du citrate trisodique ou du citrate tripotassique.

5. Capteur d'oxygène électrochimique selon l'une quelconque des revendications 1 à 4, dans lequel la solution d'électrolyte a un pH non inférieur à 2,59 et non supérieur à 6,90.

6. Capteur d'oxygène électrochimique selon la revendication 1 ou 2, dans lequel la solution d'électrolyte contient de l'acide citrique en tant qu'agent chélatant, et la solution d'électrolyte a un pH non inférieur à 3,75 et non supérieur à 5,75.

7. Capteur d'oxygène électrochimique selon la revendication 2, dans lequel l'électrode négative est faite d'un alliage de Sn-Sb.

8. Capteur d'oxygène électrochimique selon l'une quelconque des revendications 1 à 7, dans lequel la teneur en Pb de l'électrode négative est inférieure à 1000 ppm.

9. Capteur d'oxygène électrochimique selon l'une quelconque des revendications 1 à 8, dans lequel la solution d'électrolyte contient en outre au moins l'un choisi dans le groupe constitué par l'acide acétique, l'acide borique, l'acide phosphorique, l'ammoniac, l'acide carbonique, et les sels de ces composés.
